# EUROPEAN PATENT APPLICATION

(11) **EP 4 835 806 A1**
(43) Date of publication of application: **04.11.2026**
(21) Application number: 24916518.4
(22) Date of filing: 22.10.2024
(51) Int. Cl.: G06T 7/00

(54) **WELD SEAM HEIGHT MEASUREMENT METHOD AND APPARATUS, AND ELECTRONIC DEVICE AND READABLE STORAGE MEDIUM**

(30) Priority: 11.01.2024 CN 202410044180
(71) Applicant: Contemporary Amperex Technology Co., Limited, Ningde, Fujian 352100 (CN); CONTEMPORARY AMPEREX TECHNOLOGY (HONG KONG) LIMITED, Hong Kong (HK)
(72) Inventor: JIANG, Guannan, Ningde, Fujian 352100 (CN); QIN, Siyi, Ningde, Fujian 352100 (CN); SHU, Annan, Ningde, Fujian 352100 (CN)
(74) Representative: Ziebig Hengelhaupt Intellectual Property Attorneys Patentanwaltskanzlei PartGmbB
(86) International application number: PCT/CN2024/126455
(87) International publication number: WO 2025/148467

(57) **Abstract**

Disclosed in the present application are a weld seam height measurement method and apparatus, and an electronic device and a readable storage medium. The weld seam height measurement method comprises: acquiring a target depth image of a weld seam in a battery cell, wherein the battery cell comprises a top cover and a casing that are adjacent, and the weld seam is located between the top cover and the casing; on the basis of the target depth image, determining position information of the casing corresponding to a target plane in a preset three-dimensional coordinate system; and on the basis of position information of each first target pixel point in the target depth image in the preset three-dimensional coordinate system and the position information of the target plane, determining the height of the weld seam, wherein the first target pixel points are pixel points corresponding to a weld seam area in the target depth image.

## Description

### CROSS-REFERENCE TO RELATED APPLICATIONS

The present application claims priority to Chinese Patent Application No. 202410044180.7, filed on January 11, 2024 and entitled "METHOD AND APPARATUS FOR DETECTING HEIGHT OF WELD SEAM, ELECTRONIC DEVICE, AND READABLE STORAGE MEDIUM", which is incorporated herein by reference in its entirety.

### TECHNICAL FIELD

The present application relates to the field of visual inspection technologies, and in particular, to a method and an apparatus for detecting a height of a weld seam, an electronic device, and a readable storage medium.

### BACKGROUND

In a machining process of a battery cell, two components are usually to be welded. For example, a casing and a top cover are welded by laser, so that the casing and the top cover are closely combined. In a welding process, the top cover and the casing are not fully in contact, causing a weld bead protrusion to form a flange. A value of the flange is a height of the protrusion. Welding quality is detected after the welding process. In the related technology, welding quality is usually detected in a manner of image detection. An image of a weld seam is acquired, a height of the weld seam, namely, a value of a flange, in the image is identified, and then the quality of the weld seam is determined with reference to information about the height.

However, in an image acquisition process, there are often influencing factors that easily cause errors in a depth image, such as camera position offset and ambient lighting, and the errors affect accuracy of determining a height of a weld seam.

### SUMMARY

Embodiments of the present application provide a method and an apparatus for detecting a height of a weld seam, an electronic device, and a readable storage medium, to quickly and accurately determine a weld seam height with reference to a depth image.

According to a first aspect, an embodiment of the present application provides a method for detecting a height of a weld seam, including:
obtaining a target depth image of a weld seam in a battery cell, where the battery cell includes a top cover and a casing that are adjacent, and the weld seam is located between the top cover and the casing;
determining position information of a target plane corresponding to the casing in a preset three-dimensional coordinate system according to the target depth image; and
determining a height of the weld seam according to position information of each first target pixel in the target depth image in the preset three-dimensional coordinate system and the position information of the target plane, where the first target pixels are pixels corresponding to a weld seam area in the target depth image.

In this embodiment of the present application, after the target depth image of the weld seam in the battery cell is obtained, the position information of the target plane corresponding to the casing in the preset three-dimensional coordinate system is determined according to the target depth image, so that the position information of the casing in the preset three-dimensional coordinate system is accurately determined. Next, the target plane is used as a reference plane, and a height of the weld seam is determined according to a distance between each pixel corresponding to the weld seam area in the target depth image and the area target plane, thereby effectively improving accuracy of measuring the weld seam height and reducing detection errors.

In a possible implementation, the determining position information of a target plane corresponding to the casing in a preset three-dimensional coordinate system according to the target depth image includes:
obtaining a preset angle between the top cover and the casing, position information of a target straight line corresponding to the weld seam in the target depth image in the preset three-dimensional coordinate system, and position information corresponding to each pixel in the target depth image in the preset three-dimensional coordinate system; and
determining the position information of the target plane corresponding to the casing in the preset three-dimensional coordinate system according to the preset angle, the position information of the target straight line, and the position information corresponding to each pixel.

According to this embodiment of the present application, the corrected target plane is used as a reference plane to help determine the weld seam height, thereby facilitating improving accuracy of determining the weld seam height.

In a possible implementation, the determining the position information of the target plane corresponding to the casing in the preset three-dimensional coordinate system according to the preset angle, the position information of the target straight line, and the position information corresponding to each pixel includes:
determining a first plane corresponding to the top cover in the preset three-dimensional coordinate system and position information of the first plane according to position information corresponding to each first pixel in the target depth image, where the first pixels are pixels corresponding to a casing area in the target depth image;
generating position information of a second plane according to the preset angle and the position information of the first plane, where an angle between the first plane and the second plane is the preset angle; and
determining position information of the casing in the target plane in the preset three-dimensional coordinate system according to position information corresponding to each second pixel in the target depth image and the position information of the second plane.

According to this embodiment of the present application, after the first plane corresponding to the top cover is determined, with reference to a geometrical position relationship between the top cover and the casing, for example, an angle between the top cover and the casing, the target plane of the casing in the preset three-dimensional coordinate system is determined, so that an error between position information of the target plane and an actual position of the casing is effectively reduced, and a reliable data basis is provided for accurate measurement of the weld seam height.

In a possible implementation, the determining position information of the casing in the target plane in the preset three-dimensional coordinate system according to position information corresponding to each second pixel in the target depth image and the position information of the second plane includes:
moving the second plane, and determining average distances between the second pixels and moved second planes, where the average distances are average values of second distances between the second pixels and the moved planes; and
determining the position information of the target plane according to the average distances between the second pixels and the moved second planes, where the target plane is a moved second plane corresponding to a minimum average distance.

According to this embodiment of the present application, the second plane is moved with reference to the distance between the second pixel and the second plane, helping accurately search for the target plane most matching the second surface.

In a possible implementation, the determining a height of the weld seam according to position information of each first target pixel in the target depth image in the preset three-dimensional coordinate system and the position information of the target plane includes:
determining a first distance between each first target pixel and the target plane corresponding to the casing according to the position information of the first target pixel in the preset three-dimensional coordinate system and the position information of the target plane; and
determining the height of the weld seam according to the plurality of first distances.

According to this embodiment of the present application, the target plane is used as a reference plane, and a height of the weld seam is determined according to a first distance between each first pixel corresponding to the weld seam area and the target plane, thereby effectively improving accuracy of measuring the weld seam height and reducing detection errors.

In a possible implementation, the determining a first distance between each first target pixel and the target plane corresponding to the casing according to the position information of the first target pixel in the preset three-dimensional coordinate system and the position information of the target plane includes:
obtaining position information of a target straight line corresponding to the weld seam in the target depth image in the preset three-dimensional coordinate system;
determining the weld seam area according to the position information of the target plane and the position information of the target straight line corresponding to the weld seam, where the weld seam area and the target straight line are located on a same side of the target plane; and
determining the first distance between each first target pixel and the target plane corresponding to the casing according to the position information of the first target pixel in the preset three-dimensional coordinate system and the position information of the target plane.

Based on this, accuracy of measuring the weld seam height is effectively improved, and a detection error is reduced.

In a possible implementation, the determining the height of the weld seam according to the plurality of first distances includes:
determining a maximum first distance value in the plurality of first distances, and determining the maximum first distance value as the height of the weld seam.

Based on this, accuracy of determining the weld seam height is effectively improved, and a detection error is reduced.

In a possible implementation, the obtaining a target depth image of a weld seam in a battery cell includes:
obtaining a first depth image of the weld seam in the battery cell, where the first depth image includes a depth value of each initial pixel;
determining an initial fitted straight line of the weld seam in the first depth image in the preset three-dimensional coordinate system according to the depth value of each initial pixel; and
adjusting the first depth image to a target position in the preset three-dimensional coordinate system according to a position relationship between the initial fitted straight line and a preset coordinate axis in the preset three-dimensional coordinate system, to obtain the target depth image, where the target depth image includes a target straight line corresponding to the weld seam, and the target straight line is parallel to the preset coordinate axis.

According to this embodiment of the present application, the position of the first depth image is adjusted with reference to the position relationship between the initial fitted straight line and the coordinate axis, to obtain the target depth image at the target position, so that a position and a direction of the weld seam in the target depth image are standardized, and an accurate data basis is provided for subsequent weld seam height detection.

In a possible implementation, the first depth image includes a plurality of pixel rows, and an arrangement direction of the plurality of pixel rows is consistent with an extension direction of the weld seam; and
the determining an initial fitted straight line of the weld seam in the first depth image in the preset three-dimensional coordinate system according to the depth value of each initial pixel includes:
determining a second target pixel in each pixel row according to the depth value of each initial pixel, where the second target pixel is an initial pixel corresponding to a maximum depth value in the pixel row; and
generating the initial fitted straight line of the weld seam in the first depth image in the preset three-dimensional coordinate system according to position information of each second target pixel in the preset three-dimensional coordinate system.

In this embodiment of the present application, the initial fitted straight line is an initial representation of the weld seam in a three-dimensional space, and conveniently represents an approximate direction and position of the weld seam in the first depth image, facilitating improving adjustment precision in a subsequent step of adjusting the first depth image and improving accuracy of measuring the weld seam height.

In a possible implementation, the obtaining a first depth image of the weld seam in the battery cell includes:
obtaining a second depth image for a depth value of the weld seam in the battery cell; and
denoising the second depth image according to a preset image denoising algorithm, to obtain the first depth image of the weld seam in the battery cell.

According to this embodiment of the present application, image noise is suppressed, and smoothness of the image is improved.

According to a second aspect, an embodiment of the present application provides an apparatus for detecting a height of a weld seam, characterized by including:
an obtaining module, configured to obtain a target depth image of a weld seam in a battery cell, where the battery cell includes a top cover and a casing that are adjacent, and the weld seam is located between the top cover and the casing; and
a processing module, configured to determine position information of a target plane corresponding to the casing in a preset three-dimensional coordinate system according to the target depth image, where
the processing module is further configured to determine a height of the weld seam according to position information of each first target pixel in the target depth image in the preset three-dimensional coordinate system and the position information of the target plane, where the first target pixels are pixels corresponding to a weld seam area in the target depth image.

According to a third aspect, an embodiment of the present application provides an electronic device, including a processor, a memory, and a program or instructions that are stored in the memory and that is run on the processor, where the program or the instructions, when being executed by the processor, performs the steps of detecting a weld seam height according to the first aspect.

According to a fourth aspect, an embodiment of the present application provides a readable storage medium, where the readable storage medium has a program or instructions stored therein, and the program or the instructions, when executed by a processor, implements the steps of detecting a weld seam height according to the first aspect.

The foregoing descriptions are merely an overview of the technical solutions of the present application. To understand the technical means of the present application more clearly, implementation is performed according to content of the specification. Moreover, to make the foregoing and other objectives, features, and advantages of the present application more comprehensible, specific embodiments of the present application are particularly described below.

### BRIEF DESCRIPTION OF THE DRAWINGS

By reading the following detailed description of implementations, a person of ordinary skill in the art becomes clearly aware of various other advantages and benefits. The accompanying drawings are only for an objective of illustrating the implementations and are not construed as limiting the present application. In the accompanying drawings:
FIG. 1 is a schematic flowchart of a method for detecting a height of a weld seam according to an embodiment of the present application;
FIG. 2 is a schematic structural diagram of a battery cell according to some embodiments of the present application;
FIG. 3 is a schematic diagram of image acquisition according to an embodiment of the present application;
FIG. 4 is a schematic two-dimensional diagram of a target depth image according to an embodiment of the present application;
FIG. 5 is a schematic three-dimensional diagram of a target depth image according to an embodiment of the present application;
FIG. 6 is a schematic diagram of a surface position relationship according to an embodiment of the present application;
FIG. 7 is a schematic flowchart of another method for detecting a height of a weld seam according to an embodiment of the present application;
FIG. 8 is a schematic structural diagram of an apparatus for detecting a height of a weld seam according to an embodiment of the present application; and
FIG. 9 is a schematic structural diagram of an electronic device according to an embodiment of the present application.

In the accompanying drawings, the accompanying drawings are not necessarily drawn to actual scale.

### DETAILED DESCRIPTION

The features and exemplary embodiments of various aspects of the present application are described below in detail. To make the objectives, technical solutions, and advantages of the present application clearer and more comprehensible, the following further describes the present application in detail with reference to the accompanying drawings and specific embodiments. It should be understood that, the specific embodiments described herein are only used for describing the present application and are not intended to limit the present application. Persons skilled in the art implement the present application without some of these specific details. The following descriptions of the embodiments are merely intended to provide a better understanding of the present application by showing examples of the present application.

It should be noted that the relational terms herein such as first and second are used only to differentiate an entity or operation from another entity or operation, and do not require or imply any actual relationship or sequence between these entities or operations. Moreover, the terms "include", "include", or any variation thereof are intended to cover a non-exclusive inclusion. Therefore, in the context of a process, method, object, or device that includes a series of elements, the process, method, object, or device not only includes such elements, but also includes other elements not specified expressly, or include inherent elements of the process, method, object, or device. If no more limitations are made, an element limited by "include ..." does not exclude other same elements existing in the process, the method, the article, or the device which includes the element.

In a machining process of a battery cell, two components are usually to be welded. For example, a casing and a top cover are welded by laser, so that the casing and the top cover are closely combined. In a welding process, the top cover and the casing are not fully in contact, causing a weld bead protrusion to form a flange, where a value of the flange is a height of the protrusion. The welding quality is detected after the welding process. In the related technology, the welding quality is usually detected in a manner of image detection. An image of a weld seam is acquired, a height of the weld seam, that is, the value of the flange, in the image is identified, and then the quality of the weld seam is determined with reference to information about the height.

In a welding process, additional metal is generated at two sides of a weld seam, and when the additional metal exceeds a required weld seam width, a welding quality problem occurs. When a flange quality problem occurs, derived problems such as reduced weld seam strength, poor sealing, and crack generation is caused. Therefore, detection of the welding quality make it convenient to control delivery quality of a welded product.

Based on this, the welding quality is detected after the flange welding process. In the related technology, the welding quality is usually detected in a manner of image detection. An image of a weld seam is acquired, a height of the weld seam, that is, the height of the flange, in the image is identified, and then the quality of the weld seam is determined with reference to information about the height.

However, in an image acquisition process, there are often influencing factors that easily cause errors in the depth image, such as camera position offset and ambient lighting, and the errors affect accuracy of determining the height of the weld seam.

In a related technical solution of quality detection, there is also a problem of determining, by visually observing a shape and an edge of a weld seam, whether the weld seam has a flange. Although the detection manner is simple, detection accuracy and detection standard consistency are lacking. In addition, the weld seam is scanned and detected by using sensors, for example, with reference to a laser sensor, a camera, and an ultrasonic sensor, to obtain a shape, a geometrical feature, and surface quality of the weld seam, and further determine, by detecting a height of the weld seam, whether the weld seam has a quality problem. However, in the solution of performing detection by using sensors, many detection devices are involved, a calculation process is complex, and a detected weld seam height still has problems of a large error and low accuracy.

Based on the foregoing consideration, to resolve the problems of low accuracy and a large error of a weld seam height detection result, embodiments of the present application provide a method and an apparatus for detecting a height of a weld seam, an electronic device, and a readable storage medium. For a battery cell whose weld seam height is to be detected, after a target depth image of a weld seam in the battery cell is obtained, position information of a target plane corresponding to a casing in a preset three-dimensional coordinate system is determined according to the target depth image, so that the position information of the casing in the preset three-dimensional coordinate system is accurately determined. Next, the target plane is used as a reference plane, and a height of the weld seam is determined according to a distance between each pixel corresponding to a weld seam area in the target depth image and the target plane, thereby effectively improving accuracy of measuring the weld seam height and reducing detection errors.

The technical solutions described in the embodiments of the present application are applicable to detection of products produced based on physical process manufacturing such as battery manufacturing or vehicle manufacturing.

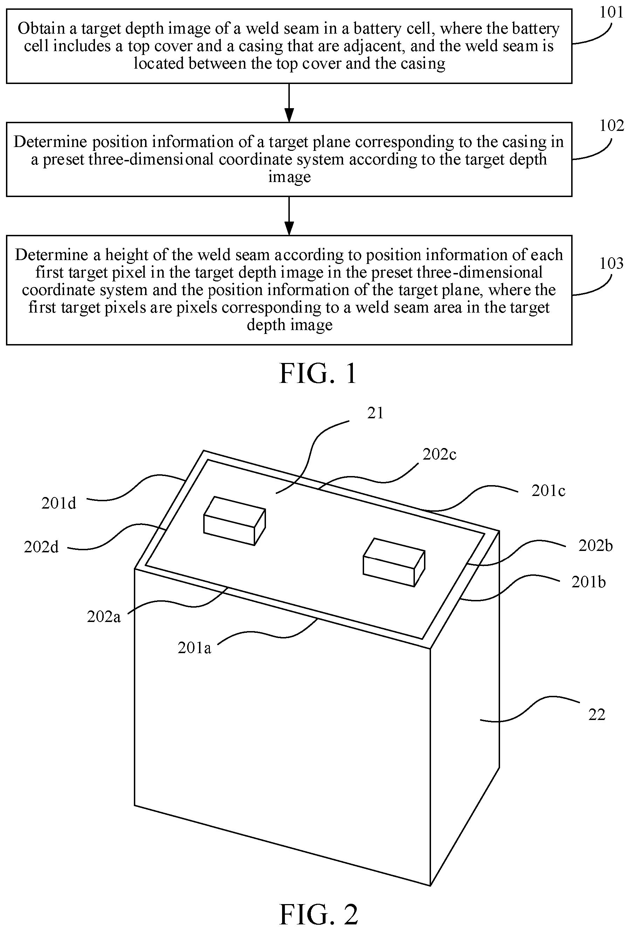

FIG. 1 is a schematic flowchart of a method for detecting a height of a weld seam according to an embodiment of the present application. As shown in FIG. 1, the method includes step 101 to step 103.

Step 101. Obtain a target depth image of a weld seam in a battery cell, where the battery cell includes a top cover and a casing that are adjacent, and the weld seam is located between the top cover and the casing.

Step 102. Determine position information of a target plane corresponding to the casing in a preset three-dimensional coordinate system according to the target depth image.

Step 103. Determine a height of the weld seam according to position information of each first target pixel in the target depth image in the preset three-dimensional coordinate system and the position information of the target plane, where the first target pixels are pixels corresponding to a weld seam area in the target depth image.

The foregoing steps are described in detail below, and details are shown as follows.

A battery mentioned in an embodiment of the present application means including one or more battery cells to provide a single physical module with a higher voltage and capacity. In some embodiments, a battery is a battery module. When there are a plurality of battery cells, the plurality of battery cells are arranged and fixed to form a battery module. In some embodiments, the battery is a battery pack. The battery pack include a box and a battery cell, and the battery cell or the battery module is accommodated in the box.

Specifically, the foregoing step 101 is involved. For one or more battery cells included in a battery, each battery cell include a casing assembly and a cell assembly located in the casing assembly.

The casing assembly of the battery cell include two parts: a casing and a top cover. The casing and the top cover are to be joined through welding. The casing include a plurality of side surfaces. The casing is welded to each side surface.

The battery cell disclosed in this embodiment of the present application is used in but is not limited to a power consuming apparatus such as a vehicle, a ship, or an aircraft. The battery cell or the battery disclosed in the present application is used to form a power supply system of the power consuming apparatus, thereby helping avoid a safety problem caused by poor welding of the top cover of the battery cell, and improve stability of battery performance and the battery life.

FIG. 2 is a schematic diagram of a structure of a battery cell according to some embodiments of the present application. With reference to FIG. 2, as shown in FIG. 2, a casing assembly include a top cover 21 and a casing 22 that are formed through welding. The casing assembly shown in FIG. 2 is prismatic. The casing assembly specifically include a top surface, a bottom surface, and a plurality of side surfaces. The top surface is a face on which the top cover 21 is located, and the casing 22 includes a plurality of side surfaces. Intersection lines are respectively formed between the top surface and the plurality of side surfaces, and the plurality of intersection lines surround the top surface.

A plurality of weld seams are formed through welding between the top cover 21 and the casing 22. As shown in FIG. 2, using an example in which the casing is rectangular, the top cover separately forms four intersection lines 201a, 201b, 201c, and 201d with four side surfaces. Four weld seams 202a, 202b, 202c, and 202d are formed through welding between the casing 32 and the top cover 31, and each weld seam is close to one intersection line of the casing assembly and is approximately parallel to the intersection line. For example, the intersection line 201a is close to the weld seam 202a and is approximately parallel to the weld seam 202a, the intersection line 201b is close to the weld seam 202b and is approximately parallel to the weld seam 202b, the intersection line 201c is close to the weld seam 202c and is approximately parallel to the weld seam 202c, and the intersection line 201d is close to the weld seam 202d and is approximately parallel to the weld seam 202d.

When welding detection is performed on the casing assembly, each weld seam is photographed by using a depth camera, and a target depth image is obtained based on an image obtained through photographing by the depth camera. Optionally, a depth image obtained through photographing by the depth camera is directly used as the target depth image, or denoising and correction processing is performed on a depth image obtained through photographing by the depth camera, and then a processed depth image is used as the target depth image.

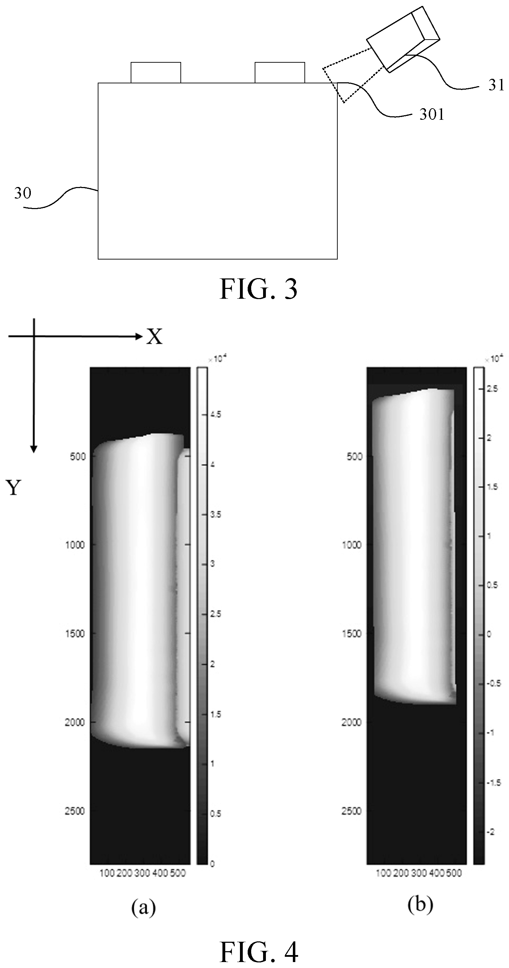

Optionally, the depth camera is a camera that obtains a distance between a photographed object and the camera, such as a CCD line scan camera. FIG. 3 is a schematic diagram of image acquisition according to an embodiment of the present application. FIG. 4 is a schematic diagram of a target depth image according to an embodiment of the present application. With reference to FIG. 3, for example, a CCD line scan camera 31 scan along an intersection line 301 of a casing assembly 30 to obtain a target depth image for the CCD line scan camera 31. The target depth image of the casing assembly 30 obtained through scanning includes the intersection line 301 and two surfaces adjacent to the intersection line 301. The two surfaces are, for example, a top surface and a side surface shown in FIG. 2. The target depth image including a weld seam is shown in (b) of FIG. 4.

After the target depth image is obtained, step 102 and step 103 are involved next. Position information of a target plane corresponding to the casing in a preset three-dimensional coordinate system is determined according to the target depth image.

Specifically, a depth value of each pixel in the target depth image is determined according to a distance between each point in the photographed object and the depth camera. That is, a depth value of each pixel in the target depth image is included in image information of the target depth image. In this way, in the target depth image, a spatial position relationship between all the pixels is learned, and position information corresponding to each pixel in the preset three-dimensional coordinate system is determined in the preset three-dimensional coordinate system. The position information corresponding to each pixel is specifically coordinates of the pixel.

For example, still with reference to FIG. 4, the depth camera scans along an extension direction of the weld seam to obtain the depth image. Optionally, in a scanning process, the weld seam is parallel to a scanning direction, the weld seam is perpendicular to a pixel row direction, and each pixel row of the target depth image is parallel to an X axis.

In the target depth image, a pixel corresponding to the casing is located on one side of the weld seam area, and a pixel corresponding to the top cover is located on the other side of the weld seam area. Therefore, an image area corresponding to the casing and an image area corresponding to the top cover in the target depth image is determined according to the position relationship between the depth camera and the weld seam. In this way, the position information of the target plane corresponding to the casing in the preset three-dimensional coordinate system and is determined according to coordinates of each pixel included in the casing area.

In this embodiment of the present application, a pixel corresponding to the weld seam area in the target depth image is a first target pixel, and then a height of the weld seam is determined according to position information of each first target pixel in the preset three-dimensional coordinate system and the position information of the target plane. Specifically, for example, a distance between each first pixel and the target plane is obtained, and then statistical calculation is performed according to a plurality of distances, to obtain the height of the weld seam. Optionally, the statistical calculation is, for example, maximizing or averaging.

In this embodiment of the present application, after the target depth image of the weld seam in the battery cell is obtained, the position information of the target plane corresponding to the casing in the preset three-dimensional coordinate system is determined according to the target depth image, so that the position information of the casing in the preset three-dimensional coordinate system is accurately determined. Next, the target plane is used as a reference plane, and a height of the weld seam is determined according to a distance between each pixel corresponding to the weld seam area in the target depth image and the area target plane, thereby effectively improving accuracy of measuring the weld seam height and reducing detection errors.

In some embodiments of the present application, to improve accuracy of determining the target plane, the foregoing step of determining position information of a target plane corresponding to the casing in a preset three-dimensional coordinate system according to the target depth image is involved. For details, refer to the following step 201 and step 202.

Step 201. Obtain a preset angle between the top cover and the casing, position information of a target straight line corresponding to the weld seam in the target depth image in the preset three-dimensional coordinate system, and position information corresponding to each pixel in the target depth image in the preset three-dimensional coordinate system.

Step 202. Determine the position information of the target plane corresponding to the casing in the preset three-dimensional coordinate system according to the preset angle, the position information of the target straight line, and the position information corresponding to each pixel.

Specifically, the preset angle between the top cover and the casing is determined according to design information of the battery cell. Optionally, an angle between the top cover and the casing is designed to be 90 degrees. Based on this, during welding of the top cover and the casing, welding is performed with reference to the angle, so that the angle between the top cover and the casing is 90 degrees. It is understood that the foregoing specific value is merely used for ease of understanding the technical solutions of the present application, but is not intended to specifically limit the implementations of the present application.

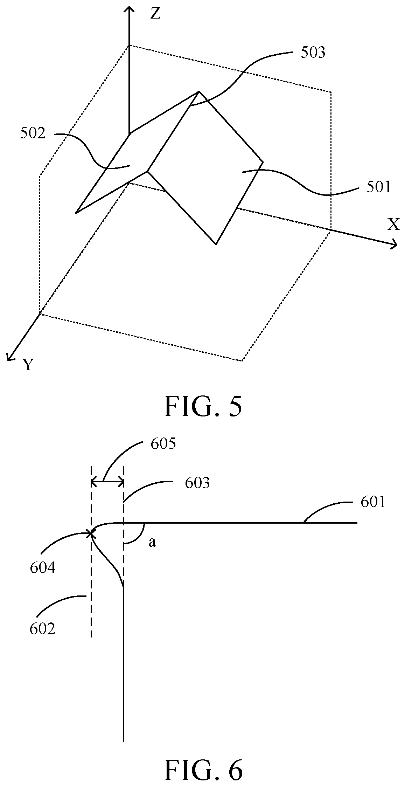

The target straight line is a straight line corresponding to the weld seam in the target depth image in the preset three-dimensional coordinate system. It is known with reference to the two-dimensional depth image shown in FIG. 4 and the three-dimensional depth image shown in FIG. 5 that each pixel corresponding to the top cover and each pixel corresponding to the casing is conveniently found.

The plane of the top cover in the preset three-dimensional coordinate system is generated through fitting according to the position information of the pixels corresponding to the top cover. The plane of the casing in the preset three-dimensional coordinate system is generated through fitting according to the position information of the pixels corresponding to the casing. Because the preset angle between the top cover and the casing is known, after the plane corresponding to the top cover is obtained, the plane of the casing in the preset three-dimensional coordinate system, that is, the target plane, is determined with reference to the preset angle.

According to this embodiment of the present application, the corrected target plane is used as a reference plane to help determine the weld seam height, thereby facilitating improving accuracy of determining the weld seam height.

In some embodiments, the determining the position information of the target plane corresponding to the casing in the preset three-dimensional coordinate system according to the preset angle, the position information of the target straight line, and the position information corresponding to each pixel include step 301 to step 303.

Step 301. Determine a first plane corresponding to the top cover in the preset three-dimensional coordinate system and position information of the first plane according to position information corresponding to each first pixel in the target depth image, where the first pixels are pixels corresponding to a top cover area in the target depth image.

Step 302. Generate position information of a second plane according to the preset angle and the position information of the first plane, where an angle between the first plane and the second plane is the preset angle, and the target straight line is located in the second plane.

Step 303. Determine position information of the casing in the target plane in the preset three-dimensional coordinate system according to position information corresponding to each second pixel in the target depth image and the position information of the second plane.

Specifically, the first pixels are pixels corresponding to the top cover area in the target depth image, and the second pixels are pixels corresponding to the casing area in the target depth image.

In some embodiments, the plane corresponding to the top cover in the preset three-dimensional coordinate system, that is, the first plane, is first generated according to the position information of the pixels corresponding to the top cover, so as to obtain the first plane and the position information of the first plane. The position information of the first plane is represented by using a plane equation.

After the position information of the first plane is obtained, the position information of the second plane is determined with reference to the preset angle, the position of the target straight line, and the plane equation of the first plane. The position information of the second plane is represented by using a plane equation.

For example, using an example in which an angle between the top cover and the casing is 90 degrees, after the first plane is determined, the normal vector of the first plane is obtained, and the first plane is rotated 90 degrees around the target straight line, to obtain the second plane. In this case, an angle between the second plane and the first plane is the preset angle, and the target straight line is located in the second plane. Specifically, FIG. 6 is a schematic diagram of a surface position relationship according to an embodiment of the present application. With reference to FIG. 6, a first plane 601 and a second plane 602 are shown, and an angle a between the first plane 601 and the second plane 602 is a preset angle. A target straight line is located in the second plane 602, and the target straight line coincides with the second plane 602 at a point 604. A height of a weld seam is indicated by using a distance 605.

Next, a position of the second plane is adjusted with reference to position information of each second pixel, to determine a target plane.

According to this embodiment of the present application, after the first plane corresponding to the top cover is determined, with reference to a geometrical position relationship between the top cover and the casing, for example, an angle between the top cover and the casing, the target plane of the casing in the preset three-dimensional coordinate system is determined, so that an error between position information of the target plane and an actual position of the casing is effectively reduced, and a reliable data basis is provided for accurate measurement of the weld seam height.

In some optional embodiments, position information of the casing in the target plane in the preset three-dimensional coordinate system is determined according to position information corresponding to each second pixel in the target depth image and the position information of the second plane. Specifically, refer to the following steps: moving the second plane, and determining average distances between the second pixels and moved second planes, where the average distances are average values of second distances between the second pixels and the moved planes; and determining the position information of the target plane according to the average distances between the second pixels and the moved second planes, where the target plane is a moved second plane corresponding to a minimum average distance.

Specifically, the second distance is a distance between each second pixel and the moved second plane.

Each time the second plane is moved, a distance between each second pixel and the moved second plane, that is, the second distance, is calculated. Therefore, during each movement, a plurality of second distances is obtained, and an average distance between the second pixels and the moved second plane is obtained by calculating an average value of the second distances.

Based on this, in a process of moving the second plane, a minimum average distance is found, and a moved second plane corresponding to the minimum average distance is determined as the target plane.

According to this embodiment of the present application, the second plane is moved with reference to the distance between the second pixel and the second plane, helping accurately search for the target plane most matching the second surface.

In some embodiments of the present application, after the target plane is determined, a height of the weld seam is determined according to position information of each first target pixel in the target depth image in the preset three-dimensional coordinate system and the position information of the target plane. Specifically, refer to the following steps: determining a first distance between each first target pixel and the target plane corresponding to the casing according to the position information of the first target pixel in the preset three-dimensional coordinate system and the position information of the target plane; and determining the height of the weld seam according to the plurality of first distances.

Specifically, the first target pixels are pixels corresponding to the weld seam area in the target depth image. In a process of flange welding, the weld seam protrudes from the welding surface. Therefore, in the preset three-dimensional coordinate system, the target straight line is not located in the target plane, but is located on one side of the target plane.

In some optional embodiments, for details of the determining a first distance between each first target pixel and the target plane corresponding to the casing according to the position information of the first target pixel in the preset three-dimensional coordinate system and the position information of the target plane, refer to the following step 401 to step 403.

Step 401. Obtain position information of a target straight line corresponding to the weld seam in the target depth image in the preset three-dimensional coordinate system.

Step 402. Determine the weld seam area according to the position information of the target plane and the position information of the target straight line corresponding to the weld seam, where the weld seam area and the target straight line are located on a same side of the target plane.

Step 403. Determine the first distance between each first target pixel and the target plane corresponding to the casing according to the position information of the first target pixel in the preset three-dimensional coordinate system and the position information of the target plane.

Specifically, the position information of the target straight line corresponding to the weld seam in the preset three-dimensional coordinate system is represented by using a line equation.

For example, an image area that is in the target depth image and that is on a same side of the target plane as the target straight line is determined as the weld seam area, and pixels in the weld seam area are first target pixels.

Next, the first distance between each first target pixel and the target plane equation is determined according to the position information of each first target pixel. Then, the height of the weld seam is determined according to the plurality of first distances.

According to this embodiment of the present application, the target plane is used as a reference plane, and a height of the weld seam is determined according to a first distance between each first pixel corresponding to the weld seam area and the target plane, thereby effectively improving accuracy of measuring the weld seam height and reducing detection errors.

In some optional embodiments, the determining the height of the weld seam according to the plurality of first distances is specifically determining a maximum first distance value in the plurality of first distances, and determining the maximum first distance value as the height of the weld seam. Therefore, accuracy of determining the weld seam height is effectively improved, and a detection error is reduced.

In some embodiments of the present application, to further improve accuracy of the weld seam height and reduce an error of the detection result based on the actual weld seam height, for details of a process of obtaining the target depth image of the weld seam in the battery cell, refer to step 501 to step 503.

Step 501. Obtain a first depth image of the weld seam in the battery cell, where the first depth image includes initial pixels and a depth value of each initial pixel.

Step 502. Determine an initial fitted straight line of the weld seam in the first depth image in the preset three-dimensional coordinate system according to the depth value of each initial pixel.

Step 503. Adjust the first depth image to a target position in the preset three-dimensional coordinate system according to a position relationship between the initial fitted straight line and a preset coordinate axis in the preset three-dimensional coordinate system, to obtain the target depth image, where the target depth image includes a target straight line corresponding to the weld seam, and the target straight line is parallel to the preset coordinate axis.

Specifically, the weld seam is scanned by using a depth camera, to obtain a scanned image of the weld seam. Optionally, a scanned image outputted by the depth camera is directly obtained, and the scanned image is used as the first depth image of the weld seam.

In some optional embodiments, specifically, the first depth image is further obtained with reference to the following steps: obtaining a second depth image for a depth value of the weld seam in the battery cell; and denoising the second depth image according to a preset image denoising algorithm, to obtain the first depth image of the weld seam in the battery cell.

Optionally, the preset image denoising algorithm be, for example, a filtering algorithm such as a Gaussian filtering algorithm. In a process of performing the preset image denoising algorithm, image noise is suppressed and smoothness of the image is improved through convolution. In this embodiment of the present application, a specific preset denoising algorithm is selected according to an image denoising requirement.

The first depth image includes initial pixels and a depth value of each initial pixel. An initial fitted straight line of the weld seam in the first depth image in the preset three-dimensional coordinate system is determined with reference to the depth value of each initial pixel.

The initial fitted straight line is an initial representation of the weld seam in a three-dimensional space, conveniently represent an approximate direction and position of the weld seam in the first depth image, and facilitate improving adjustment precision in a subsequent step of adjusting the first depth image and improving accuracy of measuring the weld seam height.

Next, the first depth image is adjusted to a target position in the preset three-dimensional coordinate system according to a position relationship between the initial fitted straight line and a preset coordinate axis in the preset three-dimensional coordinate system.

For example, the position relationship is an angular relationship between the initial fitted straight line and the preset coordinate axis. When the first depth image is adjusted to the target position, a straight line corresponding to the weld seam in the adjusted first depth image is parallel to the preset coordinate axis. In this case, an angular relationship between the initial fitted straight line and the preset coordinate axis is 0 degrees.

The first depth image is adjusted to the target position in the preset three-dimensional coordinate system. Optionally, an adjustment manner includes, but is not limited to, rotation, translation, and the like. The target position refers to a position in which the straight line corresponding to the weld seam in the adjusted first depth image is parallel to the preset coordinate axis. For example, the first depth image is shown in (a) of FIG. 4, and the adjusted first depth image, that is, the target depth image, is shown in (b) of FIG. 4.

As a specific example, FIG. 5 is a schematic three-dimensional diagram of a target depth image according to an embodiment of the present application. With reference to FIG. 5, a preset three-dimensional coordinate system includes an X axis, a Y axis, and a Z axis that are perpendicular to each other, and a preset coordinate axis is any axis in the preset three-dimensional coordinate system. A position relationship among a first plane 501, a second plane 502, and a weld seam 503 in the target depth image is shown in FIG. 5.

For example, using an example in which the preset coordinate axis is the Y axis, a position of the first depth image is adjusted according to an angle between an initial fitted straight line and the Y axis, and after the adjustment, the angle between the second straight line equation and the Y axis is 0, that is, the straight line corresponding to the weld seam in the adjusted first depth image is parallel to the Y axis. In this case, the straight line corresponding to the weld seam is the target straight line.

According to this embodiment of the present application, the position of the first depth image is adjusted with reference to the position relationship between the initial fitted straight line and the coordinate axis, to obtain the target depth image at the target position, so that a position and a direction of the weld seam in the target depth image are standardized, and an accurate data basis is provided for subsequent weld seam height detection.

In some embodiments, the first depth image includes a plurality of pixel rows, and an arrangement direction of the plurality of pixel rows is consistent with an extension direction of the weld seam. For details of the determining an initial fitted straight line of the weld seam in the first depth image in the preset three-dimensional coordinate system according to the depth value of each initial pixel, refer to the following step 601 and step 602.

Step 601. Determine a second target pixel in each pixel row according to the depth value of each initial pixel, where the second target pixel is an initial pixel corresponding to a maximum depth value in the pixel row.

Step 602. Generate the initial fitted straight line of the weld seam in the first depth image in the preset three-dimensional coordinate system according to position information of each second target pixel in the preset three-dimensional coordinate system.

Specifically, an initial pixel corresponding to a maximum depth value in each pixel row is determined by obtaining a depth value of each initial pixel. Next, the initial pixel corresponding to the maximum depth value in each pixel row is determined as a second target pixel.

The first depth image includes a plurality of pixel rows, and an arrangement direction of the plurality of pixel rows is consistent with an extension direction of the weld seam. Pixels included in each pixel row include pixels corresponding to the weld seam, and depth values of the pixels corresponding to the weld seam is usually greater than depth values of other points in the pixel row. Optionally, for the first depth image, coordinates of a pixel corresponding to a maximum depth value in each pixel row is found, where an initial pixel corresponding to the maximum depth value is the second target pixel.

Next, fitting is performed according to the coordinates of each second target pixel, to obtain an initial fitted straight line. The initial fitted straight line is a straight line corresponding to the weld seam in the preset three-dimensional coordinate system.

In this embodiment of the present application, the initial fitted straight line is an initial representation of the weld seam in a three-dimensional space, and conveniently represent an approximate direction and position of the weld seam in the first depth image, facilitating improving adjustment precision in a subsequent step of adjusting the first depth image and improving accuracy of measuring the weld seam height.

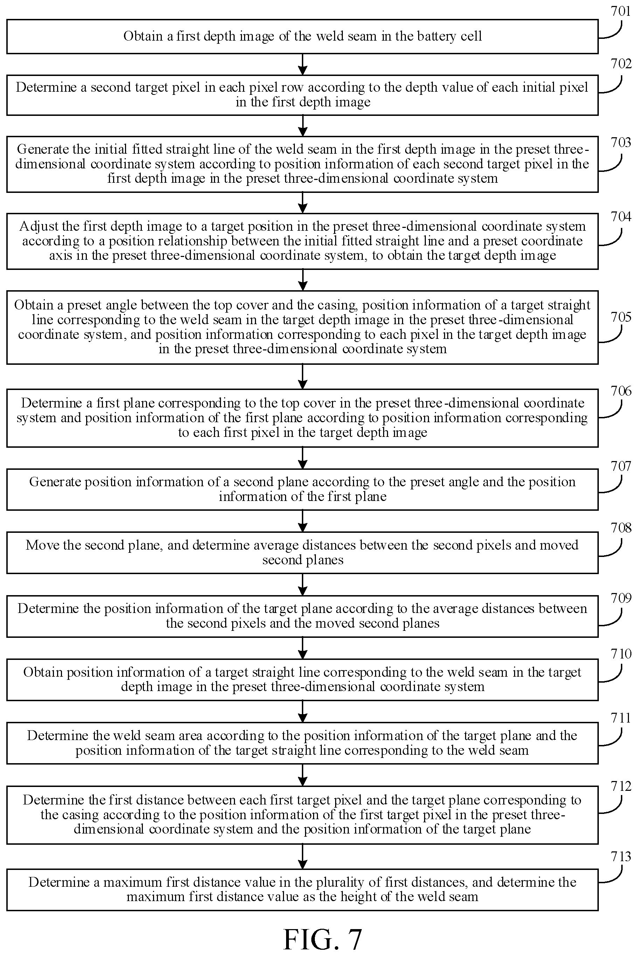

To describe the technical solutions of the present application more clearly, FIG. 7 is a schematic flowchart of another method for detecting a height of a weld seam according to an embodiment of the present application. With reference to FIG. 7, the method for detecting a height of a weld seam include step 701 to step 711.

Step 701. Obtain a first depth image of the weld seam in the battery cell.

The first depth image includes a depth value of each initial pixel.

Step 702. Determine a second target pixel in each pixel row according to the depth value of each initial pixel in the first depth image.

The second target pixel is an initial pixel corresponding to a maximum depth value in the pixel row. The first depth image includes a plurality of pixel rows, and an arrangement direction of the plurality of pixel rows is consistent with an extension direction of the weld seam.

Step 703. Generate the initial fitted straight line of the weld seam in the first depth image in the preset three-dimensional coordinate system according to position information of each second target pixel in the first depth image in the preset three-dimensional coordinate system.

Step 704. Adjust the first depth image to a target position in the preset three-dimensional coordinate system according to a position relationship between the initial fitted straight line and a preset coordinate axis in the preset three-dimensional coordinate system, to obtain the target depth image.

The target depth image includes a target straight line corresponding to the weld seam, and the target straight line is parallel to the preset coordinate axis.

Step 705. Obtain a preset angle between the top cover and the casing, position information of a target straight line corresponding to the weld seam in the target depth image in the preset three-dimensional coordinate system, and position information corresponding to each pixel in the target depth image in the preset three-dimensional coordinate system.

Step 706. Determine a first plane corresponding to the top cover in the preset three-dimensional coordinate system and position information of the first plane according to position information corresponding to each first pixel in the target depth image.

The first pixels are pixels corresponding to the casing area in the target depth image.

Step 707. Generate position information of a second plane according to the preset angle and the position information of the first plane.

An angle between the first plane and the second plane is the preset angle.

Step 708. Move the second plane, and determine average distances between the second pixels and moved second planes.

The average distances are average values of second distances between the second pixels and the moved planes.

Step 709. Determine the position information of the target plane according to the average distances between the second pixels and the moved second planes.

The target plane is a moved second plane corresponding to a minimum average distance.

Step 710. Obtain position information of a target straight line corresponding to the weld seam in the target depth image in the preset three-dimensional coordinate system.

Step 711. Determine the weld seam area according to the position information of the target plane and the position information of the target straight line corresponding to the weld seam.

The weld seam area and the target straight line are located on a same side of the target plane, and the first target pixels are pixels corresponding to the weld seam area in the target depth image.

Step 712. Determine the first distance between each first target pixel and the target plane corresponding to the casing according to the position information of the first target pixel in the preset three-dimensional coordinate system and the position information of the target plane.

Step 713. Determine a maximum first distance value in the plurality of first distances, and determine the maximum first distance value as the height of the weld seam.

In this embodiment of the present application, in this embodiment of the present application, after the target depth image of the weld seam in the battery cell is obtained, the position information of the target plane corresponding to the casing in the preset three-dimensional coordinate system is determined according to the target depth image, so that the position information of the casing in the preset three-dimensional coordinate system is accurately determined. Next, the target plane is used as a reference plane, and a height of the weld seam is determined according to a distance between each pixel corresponding to the weld seam area in the target depth image and the area target plane, thereby effectively improving accuracy of measuring the weld seam height and reducing detection errors.

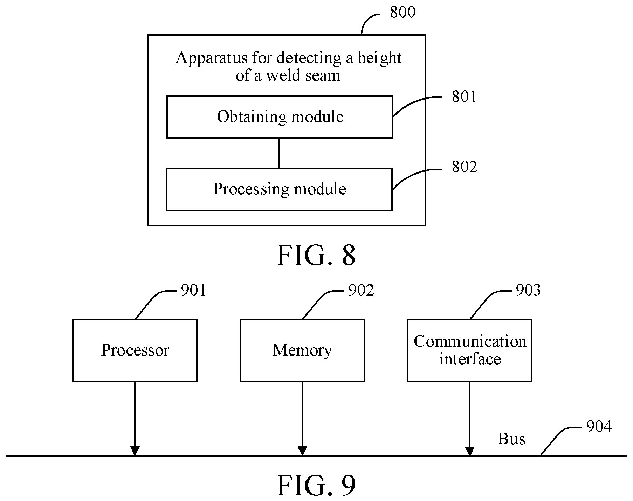

Based on a same inventive concept, the present application further provides an apparatus for detecting a height of a weld seam corresponding to the foregoing method for detecting a height of a weld seam. Details are described with reference to FIG. 8. FIG. 8 is a schematic structural diagram of an apparatus for detecting a height of a weld seam according to an embodiment of the present application. As shown in FIG. 8, the apparatus for detecting a height of a weld seam 800 include: an obtaining module 801 and a processing module 802.

The obtaining module 801 is configured to obtain a target depth image of a weld seam in a battery cell, where the battery cell includes a top cover and a casing that are adjacent, and the weld seam is located between the top cover and the casing; and
the processing module 802 is further configured to determine position information of a target plane corresponding to the casing in a preset three-dimensional coordinate system according to the target depth image, where
the processing module 802 is further configured to determine a height of the weld seam according to position information of each first target pixel in the target depth image in the preset three-dimensional coordinate system and the position information of the target plane, where the first target pixels are pixels corresponding to a weld seam area in the target depth image.

In some embodiments, the obtaining module 801 is further configured to obtain a preset angle between the top cover and the casing, position information of a target straight line corresponding to the weld seam in the target depth image in the preset three-dimensional coordinate system, and position information corresponding to each pixel in the target depth image in the preset three-dimensional coordinate system; and
the processing module 802 is further configured to determine the position information of the target plane corresponding to the casing in the preset three-dimensional coordinate system according to the preset angle, the position information of the target straight line, and the position information corresponding to each pixel.

In some embodiments, the processing module 802 is further configured to determine a first plane corresponding to the top cover in the preset three-dimensional coordinate system and position information of the first plane according to position information corresponding to each first pixel in the target depth image, where the first pixels are pixels corresponding to a casing area in the target depth image;
the processing module 802 is further configured to generate position information of a second plane according to the preset angle and the position information of the first plane, where an angle between the first plane and the second plane is the preset angle; and
the processing module 802 is further configured to determine position information of the casing in the target plane in the preset three-dimensional coordinate system according to position information corresponding to each second pixel in the target depth image and the position information of the second plane.

In some embodiments, the processing module 802 is further configured to move the second plane, and determine average distances between the second pixels and moved second planes, where the average distances are average values of second distances between the second pixels and the moved planes; and
the processing module 802 is further configured to determine the position information of the target plane according to the average distances between the second pixels and the moved second planes, where the target plane is a moved second plane corresponding to a minimum average distance.

In some embodiments, the processing module 802 is further configured to determine a first distance between each first target pixel and the target plane corresponding to the casing according to the position information of the first target pixel in the preset three-dimensional coordinate system and the position information of the target plane; and
the processing module 802 is further configured to determine the height of the weld seam according to the plurality of first distances.

In some embodiments, the obtaining module 801 is further configured to obtain position information of a target straight line corresponding to the weld seam in the target depth image in the preset three-dimensional coordinate system;
the processing module 802 is further configured to determine the weld seam area according to the position information of the target plane and the position information of the target straight line corresponding to the weld seam, where the weld seam area and the target straight line are located on a same side of the target plane; and
the processing module 802 is further configured to determine a first distance between each first target pixel and the target plane corresponding to the casing according to the position information of the first target pixel in the preset three-dimensional coordinate system and the position information of the target plane.

In some embodiments, the processing module 802 is further configured to determine a maximum first distance value in the plurality of first distances, and determine the maximum first distance value as the height of the weld seam.

In some embodiments, the obtaining module 801 is further configured to obtain a first depth image of the weld seam in the battery cell, where the first depth image includes a depth value of each initial pixel;
the processing module 802 is further configured to determine an initial fitted straight line of the weld seam in the first depth image in the preset three-dimensional coordinate system according to the depth value of each initial pixel; and
the processing module 802 is further configured to adjust the first depth image to a target position in the preset three-dimensional coordinate system according to a position relationship between the initial fitted straight line and a preset coordinate axis in the preset three-dimensional coordinate system, to obtain the target depth image, where the target depth image includes a target straight line corresponding to the weld seam, and the target straight line is parallel to the preset coordinate axis.

In some embodiments, the first depth image includes a plurality of pixel rows, and an arrangement direction of the plurality of pixel rows is consistent with an extension direction of the weld seam; and
the processing module 802 is further configured to determine a second target pixel in each pixel row according to the depth value of each initial pixel, where the second target pixel is an initial pixel corresponding to a maximum depth value in the pixel row; and
the processing module 802 is further configured to generate the initial fitted straight line of the weld seam in the first depth image in the preset three-dimensional coordinate system according to position information of each second target pixel in the preset three-dimensional coordinate system.

In some embodiments, the obtaining module 801 is further configured to obtain a second depth image for a depth value of the weld seam in the battery cell; and
the processing module 802 is further configured to denoise the second depth image according to a preset image denoising algorithm, to obtain the first depth image of the weld seam in the battery cell.

It is understood that, the apparatus for detecting a height of a weld seam in this embodiment of the present application correspond to an execution body of the method for detecting a height of a weld seam provided in the embodiments of the present application. For specific details of operations and/or functions of modules/units of the apparatus for detecting a height of a weld seam, refer to descriptions of corresponding parts in the foregoing method for detecting a height of a weld seam in the embodiments of the present application. For brevity, details are not described herein again.

FIG. 9 is a schematic structural diagram of an electronic device according to an embodiment of the present application. As shown in FIG. 9, the device include a processor 901 and a memory 902 having computer program instructions stored therein.

Specifically, the processor 901 include a central processing unit (Central Processing Unit, CPU), or an application-specific integrated circuit (Application-Specific Integrated Circuit, ASIC), or is configured as one or more integrated circuits for implementing the embodiments of the present application.

The memory 902 include a large-capacity memory used for information or instructions. By example instead of limitation, the memory 902 include a Hard Disk Drive (Hard Disk Drive, HDD), a floppy disk drive, a flash memory, an optical disc, a magnetooptical disc, a magnetic tape, a Universal Serial Bus (Universal Serial Bus, USB) drive, or a combination of two or more thereof. In an example, the memory 902 include a removable or irremovable (or fixed) medium, or the memory 902 is a non-volatile solid-state memory. The memory 902 is inside or outside the electronic device.

The memory include a read-only memory (ROM), a random access memory (RAM), a magnetic disk storage medium device, an optical storage medium device, a flash memory device, an electric, optical, or other physical/tangible memory storage device. Therefore, generally, the memory includes one or more tangible (non-transitory) computer-readable storage mediums (for example, memory devices) encoded with software including computer-executable instructions, and when the software is executed (for example, by one or more processors), the software is operated to perform operations described with reference to the method according to an aspect of the present disclosure.

The processor 901 reads and executes the computer program instructions stored in the memory 902, to implement the methods described in the embodiments of the present application, and achieve corresponding technical effects that are achieved by performing the method in the embodiments of the present application. For brevity, details are not described herein again.

In an example, the electronic device further include a communication interface 903 and a bus 904. As shown in FIG. 9, the processor 901, the memory 902, and the communication interface 903 are connected by using the bus 904 and complete mutual communication.

The communication interface 903 is mainly configured to implement communication between modules, apparatuses, units, and/or devices in the embodiments of the present application.

The bus 904 includes hardware, software, or both, and couples components of the online information traffic charging device to each other. By example instead of limitation, the bus include an Accelerated Graphics Port (Accelerated Graphics Port, AGP) or another image bus, an Extended Industry Standard Architecture (Extended Industry Standard Architecture, EISA) bus, a Front Side Bus (Front Side Bus, FSB), a Hyper Transport (Hyper Transport, HT) interconnect, an Industry Standard Architecture (Industry Standard Architecture, ISA) bus, an infinite bandwidth interconnect, a low pin count (LPC) bus, a memory bus, a micro channel architecture (MCA) bus, a peripheral assembly interconnect (PCI) bus, a PCI-Express (PCI-X) bus, a serial advanced technology attachment (SATA) bus, a Video Electronics Standards Association local bus (VLB), or another suitable bus, or a combination of two or more thereof. In an appropriate case, the bus 904 include one or more buses. Although a particular bus is described and shown in the embodiments of the present application, the present application considers any suitable bus or interconnect.

The electronic device perform the method for detecting a height of a weld seam in the embodiments of the present application, to achieve corresponding technical effects of the method for detecting a height of a weld seam described in the embodiments of the present application.

In addition, with reference to the method for detecting a height of a weld seam in the foregoing embodiments, an embodiment of the present application provide a readable storage medium for implementation. The readable storage medium has computer program instructions stored therein; and the computer program instructions, when executed by a processor, implement any method for detecting a height of a weld seam in the foregoing embodiments. An example of the readable storage medium is a non-transitory machine-readable medium, such as an electronic circuit, a semiconductor memory device, a Read-Only Memory (Read-Only Memory, ROM), a floppy disk, a Compact Disc Read-Only Memory (Compact Disc Read-Only Memory, CD-ROM), an optical disc, or a hard disk.

It should be noted that the present application is not limited to the specific configuration and processing described above and shown in the figures. For brevity, a detailed description of a known method is omitted herein. In the foregoing embodiments, several specific steps are described and shown as examples. However, the method process of the embodiments of the present application is not limited to the described and shown specific steps. A person skilled in the art make various changes, modifications, and additions or change the sequence of the steps after comprehending the spirit of the present application.

The functional blocks shown in the foregoing structural block diagrams is implemented as hardware, software, firmware, or a combination thereof. When implemented in a hardware manner, the functional blocks be, for example, an electronic circuit, an application-specific integrated circuit (Application-Specific Integrated Circuit, ASIC), proper firmware, a plug-in, a functional card, or the like. When implemented in a software manner, an element of the present application is a program or a code segment used for executing a required task. The program or code segment is stored in a machine-readable medium, or transmitted on a transmission medium or a communication link by using a data signal carried in a carrier. The "machine-readable medium" include any medium that stores or transmits information. An example of the machine-readable medium includes an electronic circuit, a semiconductor memory device, a Read-Only Memory (Read-Only Memory, ROM), a flash memory, an Erasable Read Only Memory (Erasable Read Only Memory, EROM), a floppy disk, a Compact Disc Read-Only Memory (Compact Disc Read-Only Memory, CD-ROM), an optical disc, a hard disk, an optical medium, a Radio Frequency (Radio Frequency, RF) link, or the like. The code segment is downloaded by using a computer network, for example, the Internet or an intranet.

It should be further noted that, in the exemplary embodiments mentioned in the present application, some methods or systems are described based on a series of steps or apparatuses. However, the present application is not limited to the sequence of the foregoing steps. That is, the steps is performed according to the sequence mentioned in the embodiments, or is performed in a sequence different from the sequence in the embodiments, or several steps are performed at the same time.

An embodiment of the present application further provides a computer-readable storage medium, and the computer-readable storage medium has computer program instructions stored therein; and the computer program instructions, when executed by a processor, implement a method for detecting a height of a weld seam according to an embodiment of the present application.

In addition, with reference to the method and the apparatus for detecting a height of a weld seam, and the readable storage medium in the foregoing embodiments, an embodiment of the present application provide a computer program product for implementation. When instructions in the computer program product are executed by a processor of an electronic device, the electronic device is caused to perform any method for detecting a height of a weld seam in the foregoing embodiments.

The foregoing describes aspects of the present disclosure with reference to flowcharts and/or block diagrams of the method, the apparatus (system), and the computer program product according to the embodiments of the present disclosure. It should be understood that each block in the flowcharts and/or block diagrams and a combination of blocks in the flowcharts and/or block diagrams is implemented by computer program instructions. These computer program instructions is provided to a processor of a general-purpose computer, a special-purpose computer, or another programmable data processing apparatus, to generate a machine, so that these instructions, executed by the processor of the computer or the another programmable data processing apparatus, implement functions/actions specified in one or more blocks in the flowcharts and/or block diagrams. The processor be, but is not limited to, a general-purpose processor, an application-specific processor, a special application processor, or a field programmable logic circuit. It is further understood that each block in a block diagram and/or a flowchart and a combination of blocks in a block diagram and/or a flowchart also be implemented by dedicated hardware for performing specified functions or actions, or is implemented by a combination of dedicated hardware and computer instructions.

The foregoing descriptions are merely specific implementations of the present application, and a person skilled in the art clearly understand that, for convenient and concise description, for a specific working process of the foregoing described system, module, and unit, refer to a corresponding process in the foregoing method embodiments, and details are not described herein again. It should be understood that the protection scope of the present application is not limited thereto. A person skilled in the art easily conceive of various equivalent modifications or replacements within the technical scope disclosed in the present application. All such modifications or replacements shall fall within the protection scope of the present application.

## Claims

1. A method for detecting a height of a weld seam, comprising:
obtaining a target depth image of a weld seam in a battery cell, wherein the battery cell comprises a top cover and a casing that are adjacent, and the weld seam is located between the top cover and the casing;
determining position information of a target plane corresponding to the casing in a preset three-dimensional coordinate system according to the target depth image; and
determining a height of the weld seam according to position information of each first target pixel in the target depth image in the preset three-dimensional coordinate system and the position information of the target plane, wherein the first target pixels are pixels corresponding to a weld seam area in the target depth image.

2. The method according to claim 1, wherein the determining position information of a target plane corresponding to the casing in a preset three-dimensional coordinate system according to the target depth image comprises:
obtaining a preset angle between the top cover and the casing, position information of a target straight line corresponding to the weld seam in the target depth image in the preset three-dimensional coordinate system, and position information corresponding to each pixel in the target depth image in the preset three-dimensional coordinate system; and
determining the position information of the target plane corresponding to the casing in the preset three-dimensional coordinate system according to the preset angle, the position information of the target straight line, and the position information corresponding to each pixel.

3. The method according to claim 2, wherein the determining the position information of the target plane corresponding to the casing in the preset three-dimensional coordinate system according to the preset angle, the position information of the target straight line, and the position information corresponding to each pixel comprises:
determining a first plane corresponding to the top cover in the preset three-dimensional coordinate system and position information of the first plane according to position information corresponding to each first pixel in the target depth image, wherein the first pixels are pixels corresponding to a top cover area in the target depth image;
generating position information of a second plane according to the preset angle and the position information of the first plane, wherein an angle between the first plane and the second plane is the preset angle, and the target straight line is located in the second plane; and
determining position information of the casing in the target plane in the preset three-dimensional coordinate system according to position information corresponding to each second pixel in the target depth image and the position information of the second plane.

4. The method according to claim 3, wherein the determining position information of the casing in the target plane in the preset three-dimensional coordinate system according to position information corresponding to each second pixel in the target depth image and the position information of the second plane comprises:
moving the second plane, and determining average distances between the second pixels and moved second planes, wherein the average distances are average values of second distances between the second pixels and the moved planes; and
determining the position information of the target plane according to the average distances between the second pixels and the moved second planes, wherein the target plane is a moved second plane corresponding to a minimum average distance.

5. The method according to claim 1, wherein the determining a height of the weld seam according to position information of each first target pixel in the target depth image in the preset three-dimensional coordinate system and the position information of the target plane comprises:
determining a first distance between each first target pixel and the target plane corresponding to the casing according to the position information of the first target pixel in the preset three-dimensional coordinate system and the position information of the target plane; and
determining the height of the weld seam according to the plurality of first distances.

6. The method according to claim 5, wherein the determining a first distance between each first target pixel and the target plane corresponding to the casing according to the position information of the first target pixel in the preset three-dimensional coordinate system and the position information of the target plane comprises:
obtaining position information of a target straight line corresponding to the weld seam in the target depth image in the preset three-dimensional coordinate system;
determining the weld seam area according to the position information of the target plane and the position information of the target straight line corresponding to the weld seam, wherein the weld seam area and the target straight line are located on a same side of the target plane; and
determining the first distance between each first target pixel and the target plane corresponding to the casing according to the position information of the first target pixel in the preset three-dimensional coordinate system and the position information of the target plane.

7. The method according to claim 6, wherein the determining the height of the weld seam according to the plurality of first distances comprises:
determining a maximum first distance value in the plurality of first distances, and determining the maximum first distance value as the height of the weld seam.

8. The method according to claim 1, wherein the obtaining a target depth image of a weld seam in a battery cell comprises:
obtaining a first depth image of the weld seam in the battery cell, wherein the first depth image comprises initial pixels and a depth value of each initial pixel;
determining an initial fitted straight line of the weld seam in the first depth image in the preset three-dimensional coordinate system according to the depth value of each initial pixel; and
adjusting the first depth image to a target position in the preset three-dimensional coordinate system according to a position relationship between the initial fitted straight line and a preset coordinate axis in the preset three-dimensional coordinate system, to obtain the target depth image, wherein the target depth image comprises a target straight line corresponding to the weld seam, and the target straight line is parallel to the preset coordinate axis.

9. The method according to claim 8, wherein the first depth image comprises a plurality of pixel rows, and an arrangement direction of the plurality of pixel rows is consistent with an extension direction of the weld seam; and
the determining an initial fitted straight line of the weld seam in the first depth image in the preset three-dimensional coordinate system according to the depth value of each initial pixel comprises:
determining a second target pixel in each pixel row according to the depth value of each initial pixel, wherein the second target pixel is an initial pixel corresponding to a maximum depth value in the pixel row; and
generating the initial fitted straight line of the weld seam in the first depth image in the preset three-dimensional coordinate system according to position information of each second target pixel in the preset three-dimensional coordinate system.

10. The method according to claim 8, wherein the obtaining a first depth image of the weld seam in the battery cell comprises:
obtaining a second depth image of the weld seam in the battery cell, wherein the second depth image is obtained based on scanning a depth value of the weld seam; and
denoising the second depth image according to a preset image denoising algorithm, to obtain the first depth image of the weld seam in the battery cell.

11. An apparatus for detecting a height of a weld seam, comprising:
an obtaining module, configured to obtain a target depth image of a weld seam in a battery cell, wherein the battery cell comprises a top cover and a casing that are adjacent, and the weld seam is located between the top cover and the casing; and
a processing module, configured to determine position information of a target plane corresponding to the casing in a preset three-dimensional coordinate system according to the target depth image, wherein
the processing module is further configured to determine a height of the weld seam according to position information of each first target pixel in the target depth image in the preset three-dimensional coordinate system and the position information of the target plane, wherein the first target pixels are pixels corresponding to a weld seam area in the target depth image.

12. The apparatus according to claim 11, wherein the obtaining module is further configured to:
obtain a preset angle between the top cover and the casing, position information of a target straight line corresponding to the weld seam in the target depth image in the preset three-dimensional coordinate system, and position information corresponding to each pixel in the target depth image in the preset three-dimensional coordinate system; and
the processing module is further configured to:
determine the position information of the target plane corresponding to the casing in the preset three-dimensional coordinate system according to the preset angle, the position information of the target straight line, and the position information corresponding to each pixel.

13. The apparatus according to claim 12, wherein the processing module is further configured to:
determine a first plane corresponding to the top cover in the preset three-dimensional coordinate system and position information of the first plane according to position information corresponding to each first pixel in the target depth image, wherein the first pixels are pixels corresponding to a top cover area in the target depth image;
generate position information of a second plane according to the preset angle and the position information of the first plane, wherein an angle between the first plane and the second plane is the preset angle, and the target straight line is located in the second plane; and
determine position information of the casing in the target plane in the preset three-dimensional coordinate system according to position information corresponding to each second pixel in the target depth image and the position information of the second plane.

14. The apparatus according to claim 13, wherein the processing module is further configured to:
move the second plane, and determine average distances between the second pixels and moved second planes, wherein the average distances are average values of second distances between the second pixels and the moved planes; and
determine the position information of the target plane according to the average distances between the second pixels and the moved second planes, wherein the target plane is a moved second plane corresponding to a minimum average distance.

15. The apparatus according to claim 11, wherein the processing module is further configured to:
determine a first distance between each first target pixel and the target plane corresponding to the casing according to the position information of the first target pixel in the preset three-dimensional coordinate system and the position information of the target plane; and
determine the height of the weld seam according to the plurality of first distances.

16. The apparatus according to claim 15, wherein the processing module is further configured to:
obtain position information of a target straight line corresponding to the weld seam in the target depth image in the preset three-dimensional coordinate system;
determine the weld seam area according to the position information of the target plane and the position information of the target straight line corresponding to the weld seam, wherein the weld seam area and the target straight line are located on a same side of the target plane; and
determine the first distance between each first target pixel and the target plane corresponding to the casing according to the position information of the first target pixel in the preset three-dimensional coordinate system and the position information of the target plane.

17. The apparatus according to claim 16, wherein the processing module is further configured to:
determine a maximum first distance value in the plurality of first distances, and determine the maximum first distance value as the height of the weld seam.

18. The apparatus according to claim 11, wherein the obtaining module is further configured to:
obtain a first depth image of the weld seam in the battery cell, wherein the first depth image comprises initial pixels and a depth value of each initial pixel; and
the processing module is further configured to:
determine an initial fitted straight line of the weld seam in the first depth image in the preset three-dimensional coordinate system according to the depth value of each initial pixel; and
adjust the first depth image to a target position in the preset three-dimensional coordinate system according to a position relationship between the initial fitted straight line and a preset coordinate axis in the preset three-dimensional coordinate system, to obtain the target depth image, wherein the target depth image comprises a target straight line corresponding to the weld seam, and the target straight line is parallel to the preset coordinate axis.

19. The apparatus according to claim 18, wherein the first depth image comprises a plurality of pixel rows, and an arrangement direction of the plurality of pixel rows is consistent with an extension direction of the weld seam; and
the processing module is further configured to:
determine a second target pixel in each pixel row according to the depth value of each initial pixel, wherein the second target pixel is an initial pixel corresponding to a maximum depth value in the pixel row; and
generate the initial fitted straight line of the weld seam in the first depth image in the preset three-dimensional coordinate system according to position information of each second target pixel in the preset three-dimensional coordinate system.

20. The apparatus according to claim 18, wherein the obtaining module is further configured to:
obtain a second depth image of the weld seam in the battery cell, wherein the second depth image is obtained based on scanning a depth value of the weld seam; and
the processing module is further configured to:
denoise the second depth image according to a preset image denoising algorithm, to obtain the first depth image of the weld seam in the battery cell.

21. An electronic device, comprising: a processor, and a memory having computer program instructions stored therein, wherein
the processor reads and executes the computer program instructions, to implement the method for detecting a height of a weld seam according to any one of claims 1 to 10.

22. A readable storage medium, wherein the readable storage medium has computer program instructions stored therein, and the computer program instructions, when executed by a processor, implement the method for detecting a height of a weld seam according to any one of claims 1 to 10.
